# EUROPEAN PATENT APPLICATION

(11) **EP 4 553 960 A1**
(43) Date of publication of application: **14.05.2025**
(21) Application number: 24208396.2
(22) Date of filing: 23.10.2024
(51) Int. Cl.: H01M 10/658, H01M 50/229, H01M 50/231, H01M 50/238, H01M 50/249, H01M 50/284, H01M 50/325, H01M 50/342

(54) **BATTERY PACK MODULE**

(30) Priority: 30.10.2023 GB 202316533
(71) Applicant: Rolls-Royce plc, London N1 9FX (GB)
(72) Inventor: Dobson, Matthew, Derby DE24 8BJ (GB)
(74) Representative: Rolls-Royce plc

(57) **Abstract**

The disclosure relates to a battery pack module, for example for use in an electric or hybrid aircraft. Example embodiments include a battery pack module (600) comprising: a plurality of battery cells (601₁₋ₙ) arranged in a battery cell array (602); an enclosure (604) comprising a plurality of walls surrounding the battery cell array (602); and a vent (605) connected to the enclosure (604) and arranged to provide a fluid flow path between an interior (607) of the enclosure (604) and an external environment (610) upon a pressure differential between the interior (607) of the enclosure (604) and the external environment (610) exceeding a predetermined threshold, wherein the walls of the enclosure (604) are composed of a fire-resistant laminated material comprising a plurality of fabric layers.

## Description

### TECHNICAL FIELD

The disclosure relates to a battery pack module, for example for use in an electric or hybrid aircraft.

### BACKGROUND

Interest in aircraft with electric and hybrid electric propulsion systems is increasing because of the need to reduce carbon emissions and pollution, and because of developments in the facilitating electrical technologies. Hybrid electric propulsion systems include both internal combustion engines, for example gas turbines or diesel engines, and energy storage, typically in the form of batteries. Purely electric propulsion systems completely dispense with internal combustion engines and use only batteries or, in some instances, fuel cells, as an energy source for their propulsors.

The terms Advanced Air Mobility (AAM) and Urban Air Mobility (UAM) refer to the use of aircraft - typically electric and hybrid electric aircraft - to transport passengers relatively short distances, for example tens or perhaps hundreds of kilometres. Most proposed AAM platforms have Vertical Take-Off and Landing (VTOL) or Short Take-Off and Landing (STOL) capabilities so that the aircraft can take-off and land at locations convenient for passengers, for example at so-called 'vertiports' close to or in urban environments. It is expected that the number of passengers carried by an AAM platform will be relatively small - likely fewer than twenty and typically of the order of five to ten.

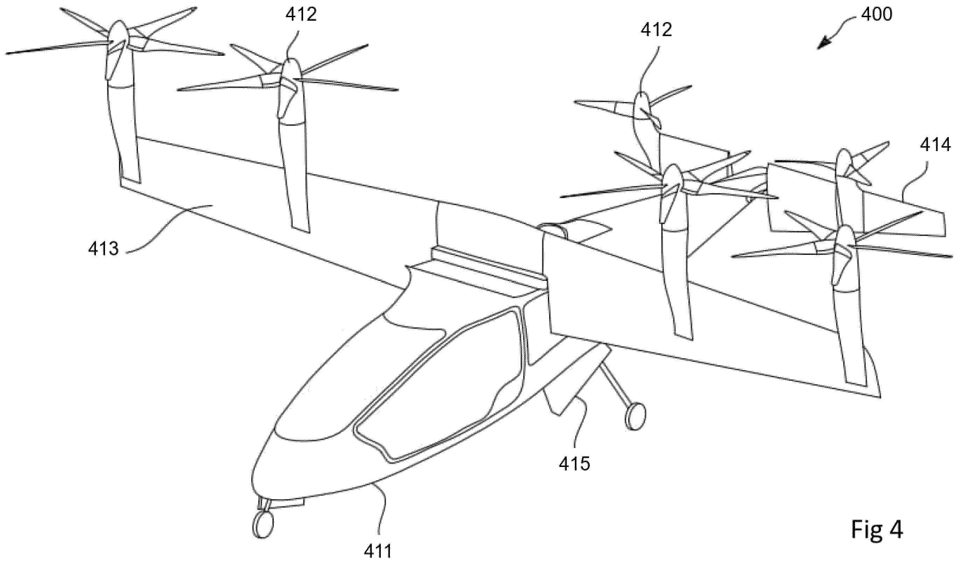

Various configurations have been proposed for AAM platforms, and one example is illustrated in Figure 4. The aircraft 400 includes a fuselage 411 and a distributed propulsion system which includes a number of propulsors 412 (in this case six propulsors) in the form of open rotors driven by rotary electric machines. The propulsors 412, which in this case are attached to wings 413 or other flight surfaces 414, are tiltable between a VTOL configuration and a horizontal flight configuration to facilitate both modes of flight. Other proposed configurations are helicopter-like configurations, for example multi-copters (e.g., quadcopters with ducted fans) and the like.

Battery packs for electric or hybrid vehicles, including aircraft, require a battery management system, which is responsible for monitoring the key parameters of the battery pack that are relevant to safety and performance. One such key parameter is temperature, another key parameter is pressure. Typical battery packs may contain hundreds of battery cells, with a vehicle typically requiring multiple such packs depending on power requirements. Since a single battery cell failure may lead to failure of an entire battery pack, it is important that close monitoring is achieved, which may be on a battery pack level or on an individual cell level.

In the event of a lithium-ion battery thermal runaway, the battery cell releases hot gases, which can affect neighbouring cells and result in cascading failure of a module or of a battery pack Containment and/or controlled release of hot gases is therefore important to ensure safety of a battery system. Under certain conditions involving high rates of reaction, a battery thermal runaway can result in explosion, where combustible elements provide a sudden release of energy.

Gas venting before, during and after thermal runaway causes the internal pressure of a battery pack enclosure to increase. This can be rapid or gradual, depending on a number of factors including temperature, the number of failing cells, the stage of thermal runaway, the particular chemistry of the cells, ignition of gases, and any generation of hydrogen (or other flammable gases) from side reactions, which may cause an explosive internal atmosphere.

Containment devices for conventional high voltage (HV) battery packs tend to be designed around the principle of having a strong, rigid battery enclosure that can act as a pressure vessel capable of withstanding high temperatures and, if required, a controlled release of pressure to prevent an explosion.

An aim of battery enclosure containment is to reduce the impact of thermal runaway by providing for containment and controlled release of hot gases, which reduces temperature and pressure levels inside the enclosure. This helps to reduce the possibility of explosion or rupture of the enclosure, which can lead to other battery packs becoming affected. Lowering temperatures inside a HV battery pack can also reduce the rate of propagation to other cells within the pack or may avoid other cells becoming affected.

Some current thermal runaway protection devices for HV battery packs may incorporate pressure rupture discs or pressure release valves, which can be activated when a differential in pressure between the interior of a battery enclosure and an external environment exceeds a threshold. One or more such devices may be incorporated in each battery enclosure depending on the battery vent management concept used.

A problem with current enclosures is that, in order to contain the effects of thermal runaway, the enclosures tend to be constructed as strong rigid boxes that are able to withstand the pressures and temperatures resulting from thermal runaway occurring in one or more cells within the enclosure. This tends to make such enclosures heavy, reducing the overall power to weight ratio of the battery pack module. While such a reduced power to weight ratio can be acceptable for ground vehicles, the effect is far less acceptable for aircraft applications.

### SUMMARY

According to a first aspect there is provided a battery pack module comprising:
a plurality of battery cells arranged in a battery cell array;
an enclosure comprising a plurality of walls surrounding the battery cell array; and
a vent connected to the enclosure and arranged to provide a fluid flow path between an interior of the enclosure and an external environment upon a pressure differential between the interior of the enclosure and the external environment exceeding a predetermined threshold,
wherein the walls of the enclosure are composed of a fire-resistant laminated material comprising a plurality of layers of fabric.

The combination of the use of a fire-resistant laminated material comprising a plurality of layers of fabric together with a vent that allows gaseous products to be ejected from the enclosure during a thermal runaway event allows the overall weight of the battery pack module to be reduced compared to a conventional battery pack module, while retaining the ability to contain or mitigate the effects of a thermal runaway event.

The walls comprising a plurality of layers of fabric allows for the enclosure to have some flexibility to allow for expansion during an increase in pressure upon a thermal runaway event occurring. Once the pressure increases above a defined threshold, the vent allows excess pressure to be relieved by venting to the external environment.

The battery pack module may further comprise a battery management system electrically connected to the battery cell array.

The vent may comprise a disc arranged to provide a fluid seal between the interior of the enclosure and the external environment, the disc being configured to rupture upon the pressure differential between the interior of the enclosure and the external environment exceeding the predetermined threshold. A sensing circuit may be connected between the disc and the battery management system and configured to provide a signal to the battery management system upon rupture of the disc.

The vent may alternatively comprise a valve configured to open upon the pressure differential between the interior of the enclosure and the external environment exceeding the predetermined threshold.

The enclosure may comprise a bleed valve configured to allow for equalisation of pressure between the interior of the enclosure and the external environment.

The vent may comprise a pipe having a first end connected to the enclosure and a second end open to the external environment.

The predetermined threshold may be between around 0.1 and 1.0 bar, optionally between around 0.3 and 0.5 bar.

The battery cell array may be configured to store between around 20 kWh and 100 kWh.

The laminated material may comprise one or more of:
a layer of a woven polyimide or polyamide fabric;
a layer of polyester film; and
a layer of a woven ceramic fibre material.

One or more of the fabric layers of the enclosure may comprise a polymeric coating for reduced gas permeability. The polymeric coating may comprise polyethylene.

The battery pack module may further comprise an electrical connection to the array passing through a wall of the enclosure via a conduit in the wall.

The battery pack module may further comprise a thermal connection to the array passing through a wall of the enclosure via a conduit in the wall.

The battery pack module may further comprise an outer frame surrounding the enclosure.

According to a second aspect there is provided a vehicle propulsion system comprising a battery pack module according to the first aspect.

According to a third aspect there is provided an aircraft comprising the vehicle propulsion system according to the second aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a schematic illustration of a hybrid electric aircraft propulsion system;
**Figure 2** is a schematic illustration of a purely electric aircraft propulsion system;
**Figure 3** is a perspective view of an example electric aircraft;
**Figure 4** is a perspective view of an electric aircraft in a VTOL configuration;
**Figure 5** is a schematic diagram of an example battery pack module;
**Figure 6** is schematic diagram of an example battery pack module;
**Figure 7** is a schematic diagram of an example vent with a rupture disc for the example battery pack module of Figures 5 or 6;
**Figure 8** is a schematic diagram of an example battery pack system comprising multiple enclosures enclosing multiple battery cell arrays.

### DETAILED DESCRIPTION

### Figure 1

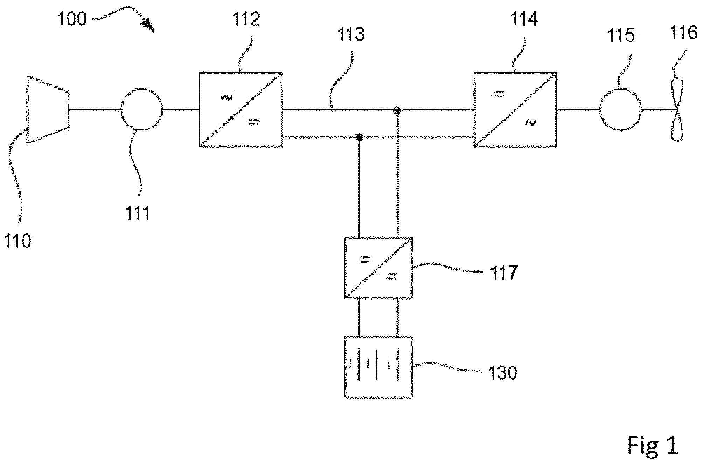

Referring to Figure 1, the propulsion system of a hybrid electric aircraft is generally indicated at 100 and incorporates both an engine 110, such as a gas turbine engine, and a battery pack 130. Both the engine 110 and the battery pack 130 are used as energy sources to power a motor-driven propeller 116, as well as ancillary electrical systems (not shown). The propulsion system 100 of the hybrid electric aircraft will typically further comprise a generator 111, an AC/DC converter 112, a high voltage DC (HVDC) distribution bus 113, a DC/AC converter 114, an electric motor 115 that drives the propeller 116, and a DC/DC converter 117.

A shaft of the engine 110 is coupled to and drives the rotation of a shaft of the generator 111 which thereby produces alternating current. The AC/DC converter 112, which faces the generator 111, converts the alternating current into direct current which is fed to various electrical systems via the HVDC distribution bus 113. These electrical systems include the motor 115 that drives the propeller 116. The motor 115 will typically be a synchronous motor that interfaces with the HVDC distribution bus 113 via the DC/AC converter 114.

The battery pack 130, which may be made up of a number of lithium-ion battery modules connected in series and/or parallel, is connected to the HVDC distribution bus 113 via the DC/DC converter 117. The DC/DC converter 117 converts between a voltage of the battery pack 130 and a voltage of the HVDC distribution bus 113. In this way, the battery pack 130 can replace or supplement the power provided by the engine 110 (by discharging and thereby feeding the HVDC distribution bus 113) or can be charged using the power provided by the engine 110 (by being fed by the HVDC distribution bus 113).

### Figure 2

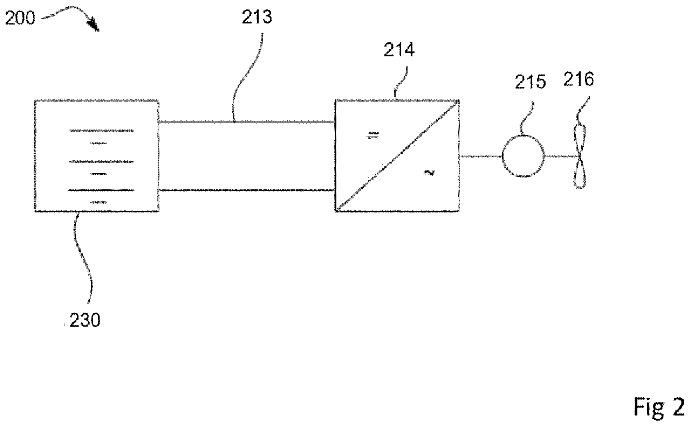

A battery pack will also appear in the propulsion system of a purely electric aircraft, generally indicated as 200 in Figure 2. The battery pack 230 feeds a HVDC distribution bus 213, optionally via DC/DC converter (not shown), which delivers power to one or more synchronous motors 215 via a DC/AC converter 214. The one or more motors 215 drive the one or more propellers 216 that propel the aircraft.

### Figure 3

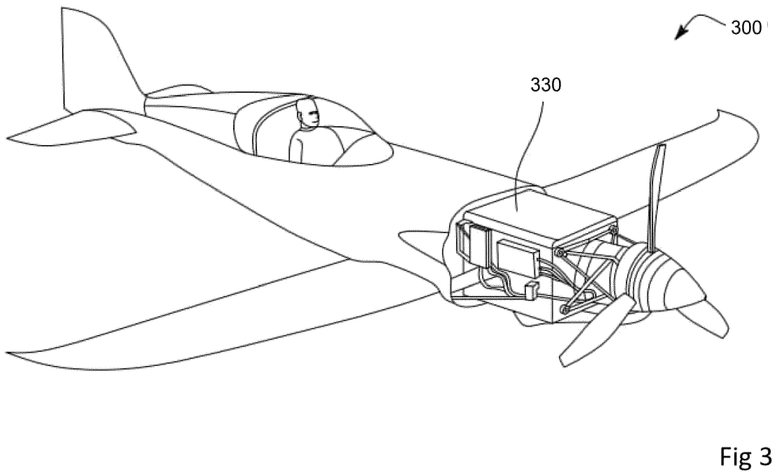

Figure 3 shows a purely electric aircraft 300. A battery pack 330 is indicated.

### Figure 4

Figure 4 illustrates an electric aircraft 400 which may be used for AAM applications. The aircraft includes a fuselage 411, which incorporates a cabin for occupants, and a distributed propulsion system which in this case has six open rotor propulsors 412 driven by rotary electric machines. Also visible in Figure 1 is a retractable undercarriage 415 in which a landing platform, in this case having wheels, can be stowed during flight.

The size of the fuselage 411 and the cabin will depend on the application requirements. In this example the cabin and fuselage are sized for five occupants, including a pilot. It is however envisaged that some AAM platforms will not require a pilot and will instead be flown under the control of an autopilot system.

Four of the propulsors 412 are attached to the wings 413 of the aircraft 400, and the remaining two propulsors 412 are attached to a separate flight control surface 414 located towards the rear of the aircraft 400. In this embodiment the wings 413 and the rear control surface 414 are tiltable between a VTOL configuration in which the axes of the rotors point upward and a horizontal flight configuration in which the axes of the rotors point forward. The horizontal flight configuration, whilst principally used for horizontal flight, may also be used for taxiing and possibly STOL operation if supported.

The electrical systems, including the electric machines that power the aircraft 400, receive electrical power from one or more battery packs (not shown) located within the aircraft 400. The battery packs may be located in any suitable part or parts of the aircraft, including the fuselage 411, the wings 413 and the propulsors 412.

Whilst the illustrated aircraft 400 is an electric VTOL (eVTOL) aircraft, it will be appreciated that AAM platforms could also be of the STOL type and could also be hybrid electric aircraft that include both engines and batteries. Hybrid electric platforms may utilize similar distributed propulsion system configurations, but the underlying power system may be a series hybrid, parallel hybrid, turboelectric or other type of hybrid power system.

### Figure 5

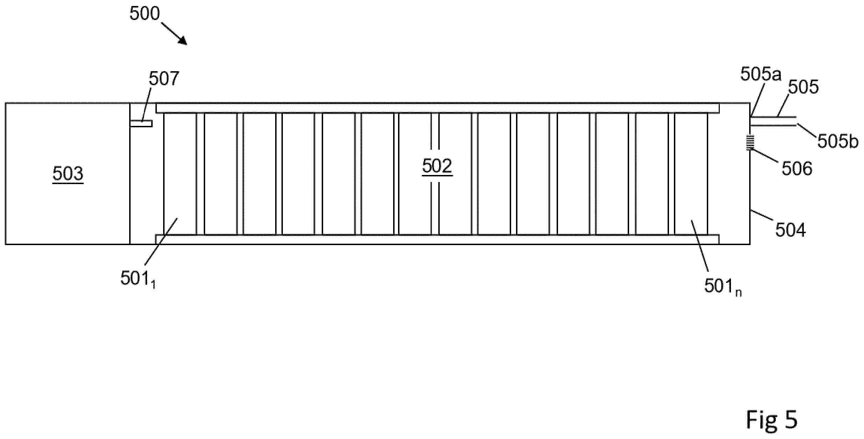

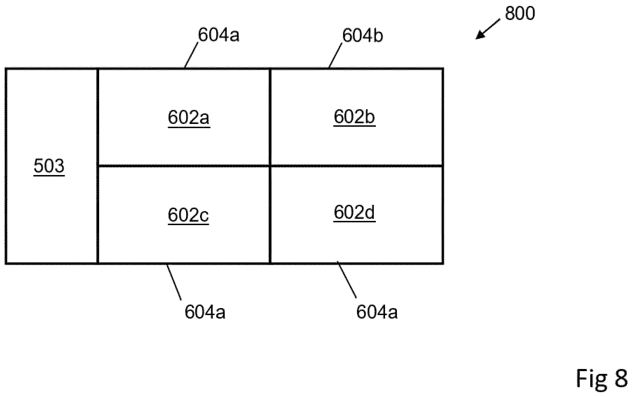

Figure 5 is a schematic diagram illustrating an example battery pack module 500, which may be used as part of a battery pack 130, 230 for an aircraft propulsion system of the types described above. Multiple such modules may be combined to make up a battery pack for a propulsion system, as for example illustrated in Figure 8.

The battery pack module 500 comprises an enclosure 504 that surrounds and encloses a plurality of battery cells 501₁₋ₙ arranged in a battery cell array 502. The individual cells 501₁₋ₙ are electrically connected to, and monitored by, a battery management system 503. The battery management system 503 may be separate from the battery enclosure 504, for example in the form of a standalone unit or a unit that can be attached and removed from the battery enclosure 504 to support maintenance and service of the battery pack module 500. The battery management system 503 monitors the charge state of the battery cell array 502 and controls electrical power flows to and from the array 502. The battery management system 503 also performs other functions relating to monitoring the array 502 for safety and performance of the battery pack module 500.

A vent 505 is connected to the enclosure 504 and is arranged to provide a fluid flow path between an interior of the enclosure 504 and an external environment. A disc may provide a fluid seal between the interior of the enclosure 504 and the vent 505, the disc being configured to rupture upon a pressure differential between the interior of the enclosure 504 and the external environment exceeding a predetermined threshold. The enclosure may comprise multiple vents in some examples.

The enclosure 504 may further comprise a bleed valve 506 that is configured to allow for equalisation of pressure between the interior of the enclosure 504 and the external environment. The bleed valve 506 allows for the internal and external pressure to equalise over time by allowing for limited fluid flow, for example via a narrow orifice or porous element. The bleed valve 506 thereby functions to prevent a pressure differential building up due to changes in external atmospheric pressure or temperature variations within the enclosure 504. Such changes may occur over time periods extending from minutes to hours, while changes in pressure that can cause the disc to rupture may occur over shorter periods of time, for example from seconds to minutes.

The vent 505 shown in Figure 5 comprises a pipe, or duct, having a first end 505a connected to the enclosure 504 and a second end 505b open to the external environment. The vent 505 may be arranged so that the interior of the enclosure 504 has, upon rupture of the disc, a fluid path to an exterior of a vehicle, typically an aircraft, in which the battery pack module 500 is installed, thereby directly gases resulting from failure of one or more of the battery cells in the array 502 to the external environment. The fluid path may include a manifold connecting multiple battery pack enclosures to a common exhaust port. The manifold may comprise arrangements such as one-way valves to prevent back flow of exhaust gases affecting other battery pack enclosures.

Due to the dimensions of a typical battery pack, which may be in the form of a rectangular prism or cuboid, a small amount of internal pressure can create a significantly high mechanical force onto the surfaces of the battery pack enclosure. It is therefore preferred to keep any pressure differential between the interior of the battery pack enclosure and the external environment as low as possible. This reduces the weight of the enclosure because less material is required to achieve the required mechanical properties. A lower overall weight increases the energy density (e.g. in Wh/kg) of the battery pack, and is therefore desirable as a product solution, particularly in aerospace applications.

An aviation battery pack must survive frequent changes in altitude as the aircraft moves between ground and flight cruise altitude. This causes a differential pressure between the inside and outside of a battery pack. This is a highly cyclic behaviour compared to other battery markets, such an automotive, where changes are significantly more gradual/slow. Therefore, any vent management device used must be sized to satisfy requirements of the mission and with a pressure rating that does not result in rupture under normal conditions.

A thermal runaway (TR) event is of a hazardous nature, due to the possibility of associated fire, explosion and/or gas evolution. Therefore, the earlier such an event is detected, the earlier safety measures can be taken and any effect minimised. Overall, there is a need to develop accurate and fast early detection tools and protective vent management solutions. If a trigger point is reached, for example due to overheating of a single cell, a reaction may begin between the anode and electrolyte of the cell that releases heat and gas. This may cause the separator to cease working and then cause reactions to take place between the cathode and the electrolyte, releasing further heat and gas. Further reactions may then occur involving other materials such as the binder in the cell, releasing further heat and gas. Ultimately other components of the battery cell array may react and/or melt, causing complete breakdown of the array and fire or explosion of the battery pack module.

Managing TR or reducing its hazardous impacts can be achieved in various ways. Firstly, the TR can be prevented from happening in the first place, for example by keeping the temperature of cells in a battery pack below a critical limit through cooling and operational control, inert cell chemistry or other features including minimising manufacturing defects. Secondly, the risk of TR can be reduced by isolating the source posing the risk or limiting the TR to occur in a localised region. Thirdly, if TR has already started, attempts may be made to extinguish the thermal event and prevent further cascading, for example by emergency rapid cooling and active anti propagation measures. Fourthly, if TR has already started and cannot be extinguished, delaying its propagation may allow for actions to be taken such as safe evacuation of passengers. This may be achieved for example through use of fire-retardant materials. Fifthly, the onset of TR may be diverted to reduce the risk of hazardous propagation, for example through vent flow management or thermal dissipation conductive pathways.

Important factors to consider when designing for avoiding or mitigating TR include: the battery size and type; the design and application implementation; the application type; and the environment (e.g. temperature, humidity, human interaction, external conditions). The battery design can significantly affect propagation of a TR event. There are technologies available that may for example provide thermal barriers, physical separation or cooling. These are a compromise to added weight, volume and cost of the battery, where the impact varies depending on the application, for example use in an electric vehicle (EV) compared with stationary storage. Propagation is determined by the balance between heat generation and heat removal. The battery therefore needs to be designed to address this balance. Anti Propagation design solutions will impact the volume and weight of a battery solution.

There are potential hazards of lithium-ion batteries in particular, which are widely used due to their relatively high storage capacity per unit weight. These include: chemical hazard (due to release of chemicals such as HF,POF₃, etc.), which is dependent on cell chemistry; and electrical hazard (i.e. a high hazardous voltage). Cumulative electrical and chemical hazards can lead to thermal runaway, including heat, flame/fire, and electrochemical hazards (gas properties, smoke, arcing). Mechanical hazards may also result due to the effect of projectiles from explosion.

Major possible consequences in case of thermal runaway include: 1. Flammable/toxic gas emission (rupture and bursting, mechanical hazards); 2. Flame ignition, and possible flame propagation from cells or batteries casing and outside such as other parts of the vehicle or battery application architecture; and 3. Heat emission and Thermal Runaway Propagation from cell to cell or battery to battery, even in the absence of flames; 4. Electrical failure, resulting from loss of power from one or more battery packs; and 5. Explosion, in which an explosion pressure wave (for example from an explosive stochiometric mix inside a battery cell) may travel through the vent management exhaust, without which the battery enclosure could fracture and send out projectiles, potentially causing more damage to other parts of the system or surrounding.

TR events result in various cell products being released, such as: thermal energy, where the temperature of a cell reaches critical level for decomposition of internal components; gases, due to battery electrolyte evaporation; gases due to generation of volatile and hazardous products as pressure builds within a cell; fire resulting from gas phase reactions escalating to gas ignition; solids ejection, resulting from a full TR ejection (including solids) over time.

It is consequently important to consider controlled venting or vent management of a battery pack module. This may result in: a reduced propensity for propagation; management of pressure within the cell during TR to reduce temperatures for as long as possible; evacuation of hot gases to avoid increasing the temperature of neighbouring cells; directing flare and ejecta to a safe location to avoid damage to surrounding components and dissipate heat. Gases building up inside an enclosure can eventually result in an explosion, while releasing gases in a controlled manner can decrease the risk of explosion and can avoid the potential for human exposure to toxic gases and excessive heat.

The possibility of failure of a single cell failure in a battery pack containing many similar cells, while having a low probability, cannot be completely eliminated, at least not at a realistic cost. Safety requirements for battery packs may therefore focus on measurement and attempting to reduce the severity and impact of any failure. A battery system should therefore be designed to prevent a single cell failure from propagating to the extent that there is fire external to the battery pack module or to an explosion.

Battery packs can in some cases be designed to prevent the propagation of thermal runaway of one cell to consume an entire battery pack. Various protection strategies at different system levels may be implemented for HV battery packs, which are summarised in Table 1 below. Similar protection strategies may be adopted at different system levels depending on the application. Understanding the system requirements relies on establishing the boundary conditions and what strategies and technologies have been adopted at adjacent system levels (i.e. those both above and below). Vent routing and extraction, the subject of the present disclosure, applies to various of these system levels, including battery pack and module design, application and environment.

**Table 1 - Different levels of protection for a battery pack module**

| **Level** | **System** | **Protection Strategies** | | | | |
|---|---|---|---|---|---|---|
| 1 | Cell chemistry | Ceramic Separator, shut-down separator. internal isolation | | | | |
| | | Active material type and composition/formulation. | | | | |
| | | Ratio of materials (composite electrode) | | | | |
| | | Electrolyte additives and solvent type | | | | |
| 2 | Assembled Cell | Cell vent, Rupture disc over-pressure rating, CID (current interrupt device), wall thickness, gasket or seal rating, PTC (positive temperature coefficient) device | | | | |
| 3 | Battery Module | Sensing technologies and alarms | Cooling strategy, Flame retardant materials, Heat shielding, Ingress protection (IP rating) | Vent fluid pathway/ exhaust extraction | Shock absorption, Structural design, vented containment. | Fusing |
| 4 | Battery Pack | | | | | Power management, health monitoring, pressure limiting |
| 5 | Application | Chassis design, Architecture/ pack location | | | | Active ambient/ environment control |
| 6 | Environment/ Infrastructure | Limitation of system operating window, User Safety manual, Material safety data sheet | | | Physical barriers and structures | |
| 7 | Fire Fighter/Emergency Services | Extinguishing devices, Alarms, remote health monitoring, suppression systems | | | | |

As well as sensing rupture of the disc, the battery pack module 500 may be configured to receive a temperature signal from a temperature sensor 507 that is configured to sense a temperature of the interior of the enclosure 504. The temperature signal may be used by the battery management system 503 in combination with a signal from the disc to provide one or two possible alerts. A first alert may be provided upon detection of rupture of the disc, with or without the use of the temperature sensor 507. This may, however, not be sufficient to determine that a thermal runaway event has started because in some cases the disc may burst due to other factors during normal use. The first alert may therefore be merely a warning that a disc needs replacing. A second alert may be provided upon detection of rupture of the disc and upon detection of a temperature of the interior of the enclosure 504 being above a defined temperature threshold. This combination can be used to more definitively determine that a thermal runaway event has started. The battery management system 503 may then disconnect the array 502 in an attempt to mitigate the effects and impact of thermal runaway, for example to prevent any electrical power drawn from the array. Venting the enclosure 504 may then allow the thermal runaway event to be contained or stopped, allowing other battery arrays to continue operation.

### Figure 6

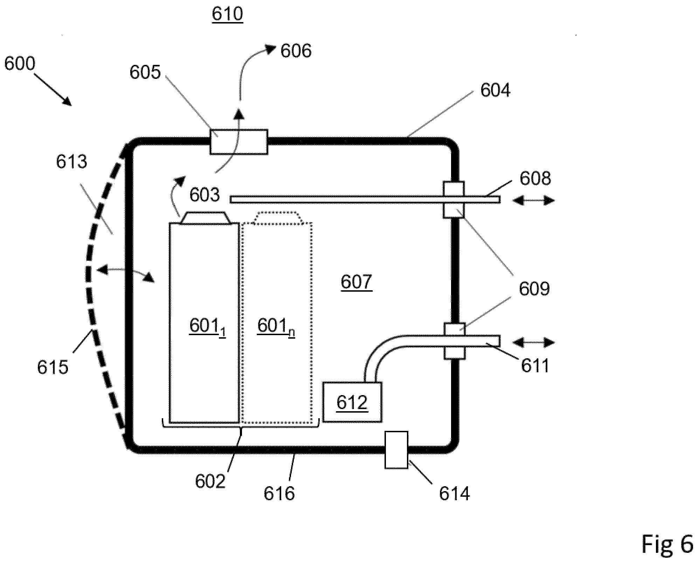

Figure 6 illustrates schematically an example battery pack module 600, in which the battery management system is not shown but may be of a similar arrangement to that in Figure 5 described above. The battery pack module 600 comprises an array 602 of battery cells 601₁₋ₙ (only two of which are illustrated, although there will typically be many more). The battery cells 601₁₋ₙ may be cylindrical in shape and arranged in a hexagonal array. Other cell shapes and array arrangements are possible, for example prismatic or pouch cell shapes. The array 602 is enclosed within the interior 607 of an enclosure 604. Each battery cell 601₁₋ₙ may typically be a lithium-ion type cell, although other cell chemistries are possible.

The enclosure 604 comprises walls that are composed of a plurality of layers of a thermally insulating and fire-resistant fabric material. The walls of the enclosure 604 may for example be composed of a layered structure comprising a woven ceramic fabric and oxidised polyacrylonitrile fibres, as disclosed in WO 2011/043860 A1. The material may comprise a polyamide (Nylon) fabric layer to provide a structure to the walls, which may be coated with polyethylene for reduced gas permeability. A polyester film layer may be provided for strength and thermal insulation. A polyimide layer may be provided for fire resistant properties. For areas of the enclosure 604 that require more rigid properties, such as around the vent 605 and connections 609, an epoxy resin material may be used.

The enclosure 604 comprises a vent 605 that provides a fluid flow path between the interior 607 of the enclosure 604 and an external environment 610. The vent 605 may comprise a disc configured to burst above a predetermine pressure differential or may comprise a valve configured to open above a predetermined pressure differential, thereby allowing flow of gases from the interior 607 to the external environment 610.

The enclosure 604 may comprise further features including conduits 609 through which are provided electrical connections 608 and thermal connections 611, the thermal connection 611 connecting to a thermal management device 612 within the module 600 for heating or cooling of the array 602 during normal operation. The thermal connection 611 may for example comprise a heat pipe passing through a wall of the enclosure 604 to an external heatsink. Various other components may be provided within the enclosure 604, such as pressure sensors, temperature sensors and control valves.

The enclosure 604 may further comprise a mounting point 614 to allow the module to be mounted as part of a battery pack system in an aircraft.

Upon onset of thermal runaway in one of the cells 601₁, gases 603 produced by reactions within a battery cell 601₁ are released into the interior 607 of the enclosure 604. This initially causes a pressure within the interior volume 607 of the module 600 to rise, which causes one or more of the walls to flex outwards, as indicated in Figure 6 by movement of a side wall 615 creating an additional volume 613. Once a predetermined pressure differential is reached, the vent 605 opens and the gases 603 are directed towards the external environment 610. The exhaust gases 606 can be directed away from the battery pack module 600 and away from the vehicle in which the battery park module is mounted. Release of the exhaust gases 606 allows the pressure and temperature of the interior volume 607 of the enclosure to reduce.

Given that the walls are to some extent flexible, the enclosure 604 may be contained within a frame or cage (not shown) that constrains expansion of the enclosure 604 within defined limits and defines a rigid outer shape for the battery pack module 600. The frame may be composed of a lightweight material such as an aircraft grade aluminium alloy and therefore does not need to add a significant weight to the overall weight of the battery pack module 600.

One or more of the walls of the enclosure 604 may be composed of a different material to the other walls. A base wall 616, for example, may be composed of a more rigid material such as a metal, to provide a firm mounting base for the enclosure 604. The other walls can remain flexible and allow a degree of expansion during a thermal runaway event while preventing propagation of thermal runaway to neighbouring modules or other components due to the thermal insulation properties of the enclosure 604. An outer frame or cage, as described above, may alternatively provide such a function.

### Figure 7

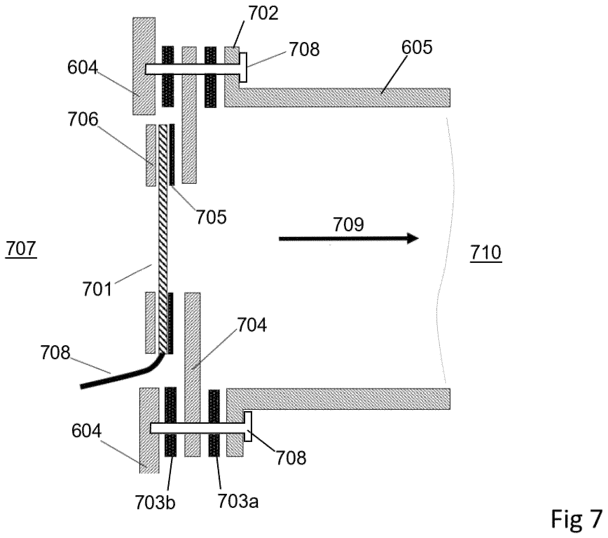

As illustrated in Figure 7, in examples where the vent comprises a burst disc, the disc 701 may be arranged within a mechanical assembly that allows the disc 701 to be changed from outside of the battery pack module. The disc 701 is secured to the battery pack module enclosure 604 at a first end of the vent 605, which is in the form of a pipe or duct. The first end of the vent 605 comprises a flange 702, which is secured to the enclosure 604 via gaskets 703a, 703b and an annular flange adaptor 704 using fasteners 708. The disc 601 is attached to the flange adaptor 704 via a further gasket 705, the outer edge of the disc 701 being held between a backing plate 706 and the annular flange adaptor 704. Once assembled, the rupture disc 701 provides a seal between the interior 707 of the enclosure 604 and the vent 605. A sensing circuit connecting the disc 601 to the battery management system 503 may comprise a cable 708 providing a connection between the disc 701 and the battery management system 503.

Upon rupture of the disc 701 in the event of a pressure differential between the interior 707 of the enclosure 604 and the external environment 710 exceeding a predetermined threshold, gases from within the enclosure 604 travel through the vent 605 in a flow direction 709 toward the external environment 710.

If the disc 701 is ruptured, only the disc 701 and optionally also the associated seals or gaskets need to be replaced. The cable 708 may comprise an inline connection for ease of replacement of the disc without the need to disassemble the battery pack module. In a general aspect therefore, the disc 701 is secured to a first end of the vent 605 that is secured to the enclosure 604. Replacement of the disc 701 can be more easily effected by disconnecting the vent 605 from the enclosure.

The vent 605 may be arranged and oriented such that collection of water and debris from the external environment 710 is prevented during normal use. An outlet of the vent 605 may therefore be oriented downwards relative to an upright orientation of a vehicle to which the battery pack module is mounted to prevent collection of water and debris in the vent.

A typical operating overpressure for the disc 701, i.e. a pressure differential the disc is designed to withstand without bursting, is between around 0.1 and 1 bar, while an overpressure of up to around 0.3 to 0.5 bar may provide an advantage for battery enclosures having a capacity of between around 20 kWh and 100 kWh used in advanced electric and hybrid aircraft applications.

### Figure 8

Figure 8 illustrates schematically an example battery pack 800 that comprises multiple enclosures 604a-d connected to a common battery management system 503. Each of the enclosures 604a-d may comprise a battery cell array 602a-d, vent, rupture disc or valve and sensing circuit connected to the battery management system 503 as described herein, allowing each enclosure 604a-d to vent gases to an external environment in the event of a thermal runaway event. Doing so may prevent thermal runaway from extending to other modules in the battery pack 800.

## Claims

1. A battery pack module (600) comprising:
a plurality of battery cells (601₁₋ₙ) arranged in a battery cell array (602);
an enclosure (604) comprising a plurality of walls surrounding the battery cell array (602); and
a vent (605) connected to the enclosure (604) and arranged to provide a fluid flow path between an interior (607) of the enclosure (604) and an external environment (610) upon a pressure differential between the interior (607) of the enclosure (604) and the external environment (610) exceeding a predetermined threshold,
wherein the walls of the enclosure (604) are composed of a fire-resistant laminated material comprising a plurality of fabric layers.

2. The battery pack module (600), further comprising a battery management system (503) electrically connected to the battery cell array (602).

3. The battery pack module (600) of claim 1 or claim 2, wherein the vent (605) comprises a disc (701) arranged to provide a fluid seal between the interior (607) of the enclosure (604) and the external environment (610), the disc (701) being configured to rupture upon the pressure differential between the interior (607) of the enclosure (604) and the external environment (610) exceeding the predetermined threshold.

4. The battery pack module (600) of claim 3, further comprising a sensing circuit (708) connected between the disc (701) and the battery management system (503) and configured to provide a signal to the battery management system (503) upon rupture of the disc (701).

5. The battery pack module (600) of claim 1 or claim 2, wherein the vent (605) comprises a valve configured to open upon the pressure differential between the interior (607) of the enclosure (604) and the external environment (610) exceeding the predetermined threshold.

6. The battery pack module (500, 600) of claim 1, wherein the enclosure (504) comprises a bleed valve (506) configured to allow for equalisation of pressure between the interior (607) of the enclosure (504, 604) and the external environment (610).

7. The battery pack module (500, 600) of any preceding claim, wherein the vent (505, 605) comprises a pipe having a first end connected to the enclosure (504, 604) and a second end open to the external environment (610).

8. The battery pack module (500, 600) of any preceding claim, wherein the predetermined threshold is between around 0.1 and 1.0 bar.

9. The battery pack module (500, 600) of any preceding claim, wherein the battery cell array (502, 602) is configured to store between around 20 kWh and 100 kWh.

10. The battery pack module (500, 600) of any preceding claim, wherein the laminated material comprises one or more of:
a layer of a woven polyimide or polyamide fabric;
a layer of polyester film; and
a layer of a woven ceramic fibre material.

11. The battery pack module (500, 600) of claim 10, wherein one or more of the fabric layers of the enclosure comprise a polymeric coating for reduced gas permeability.

12. The battery pack module (500, 600) of claim 11, wherein the polymeric coating comprises polyethylene.

13. The battery pack module (500, 600) of any preceding claim, further comprising an electrical connection (608) to the array (602) passing through a wall of the enclosure (604) via a conduit (609) in the wall.

14. The battery pack module (500, 600) of any preceding claim, further comprising a thermal connection (608) to the array (602) passing through a wall of the enclosure (604) via a conduit (609) in the wall.

15. The battery pack module (600) of any preceding claim, further comprising an outer frame surrounding the enclosure (604).
